Europäisches Patentamt

**European Patent Office**

**Office européen des brevets**

(11) Publication number: **0 178 898**
A2

(12) # EUROPEAN PATENT APPLICATION

(21) Application number: **85307401.1**

(22) Date of filing: **15.10.85**

(51) Int. Cl.⁴: **G 11 B 5/31**
G 11 B 5/29, G 11 B 5/39

(30) Priority: **18.10.84 US 661987**

(43) Date of publication of application:
**23.04.86 Bulletin 86/17**

(84) Designated Contracting States:
**DE FR GB**

(71) Applicant: **International Business Machines Corporation
Old Orchard Road
Armonk, N.Y. 10504(US)**

(72) Inventor: **Argumedo, Armando Jesus
1521 S. Melpomene Way
Tucson Arizona 85748(US)**

(72) Inventor: **Schmalhorst, Joseph Martin
4455 N Camino Cardenal
Tucson Arizona 85718(US)**

(74) Representative: **Hobbs, Francis John
IBM United Kingdom Patent Operations Hursley Park
Winchester, Hants, SO21 2JN(GB)**

(54) An inductive magnetic transducer.

(57) An inductive magnetic transducer for a multiple track head has a soft magnetic material closure pad (24) formed across a multiturn coil (22). The closure pad (24) has a width corresponding to the track width at the front gap of the transducer and a width at the back gap area (12) of the transducer which is less than the width of the innermost turn of the coil (22).

Fig-3

EP 0 178 898 A2

## AN INDUCTIVE MAGNETIC TRANSDUCER

This invention relates to inductive magnetic transducers for writing on or reading from magnetic media.

With the advent of increasing track density, particularly in magnetic tape devices, it is essential that the read/write heads associated with those devices are efficiently and precisely coupled to the recorded track areas. In the past, the efficient coupling of flux from the write head to the tape required that the coils of the head extend over a wider width than the track. As a consequence, the heads were wider than the track and that limited the track density capability of a multitrack recording device. Application of the present invention overcomes this limited track density capability by enabling tracks to be recorded efficiently and very close to one another.

US-A-3,685,144 describes a planar magnetic transducer which has a spiral planar coil which is much wider than the flux closure structure and consequently would occupy significantly more space than the write track width. Such a design is acceptable in a disk application where a single head is associated with a single track at any one time, but is not acceptable in a magnetic tape environment where multiple heads are associated with adjacent tracks simultaneously. Attempting to place these heads close together to form a multi-track head would be inefficient since the coil structure would require substantial space between adjacent heads with resultant very poor space utilization.

US-A-3,787,964 describes another method for manufacturing an inductive head having a planar spiral coil. The head design disclosed in that document would not provide an efficient multi-track head.

US-A-4,085,430 describes a further thin film magnetic head in which gap bounding core parts overlap. It does not show any efficient way of coupling the head to a track so that a closely packed multi-track head could be developed.

US-A-4,153,458, shows a thin film magnetic head assembly in which the coil is deposited around a back gap region.  It would not provide an efficient multi-track head where the widths of the heads would correspond to the widths of the track.

In one aspect, the invention provides an inductive magnetic transducer comprising a multiturn coil positioned on a magnetic substrate and a soft magnetic closure pad extending from a front gap portion of the transducer across the coil to a back gap area of the transducer, characterised by the closure pad having a width corresponding to a record track width at the front gap of the transducer and a width at the backgap area of the transducer which is less than the minimum width of the coil.

Other aspects of the invention are defined in the claims appended hereto.

How the invention can be carried out will now be described by way of example, with to the accompanying drawings, in which:-

Figures 1 and 2 are schematic representations of prior art inductive magnetic heads;

Figure 3 is a planar schematic representation of a high track density write head;

Figure 4 is a sectional view of a portion of Figure 3 taken on the line A-A;

Figure 5 is a planar schematic view of a portion of an interleaved high track density read/write head combination; and

Figure 6 is a perspective view of an interleaved read and write head.

**0178898**

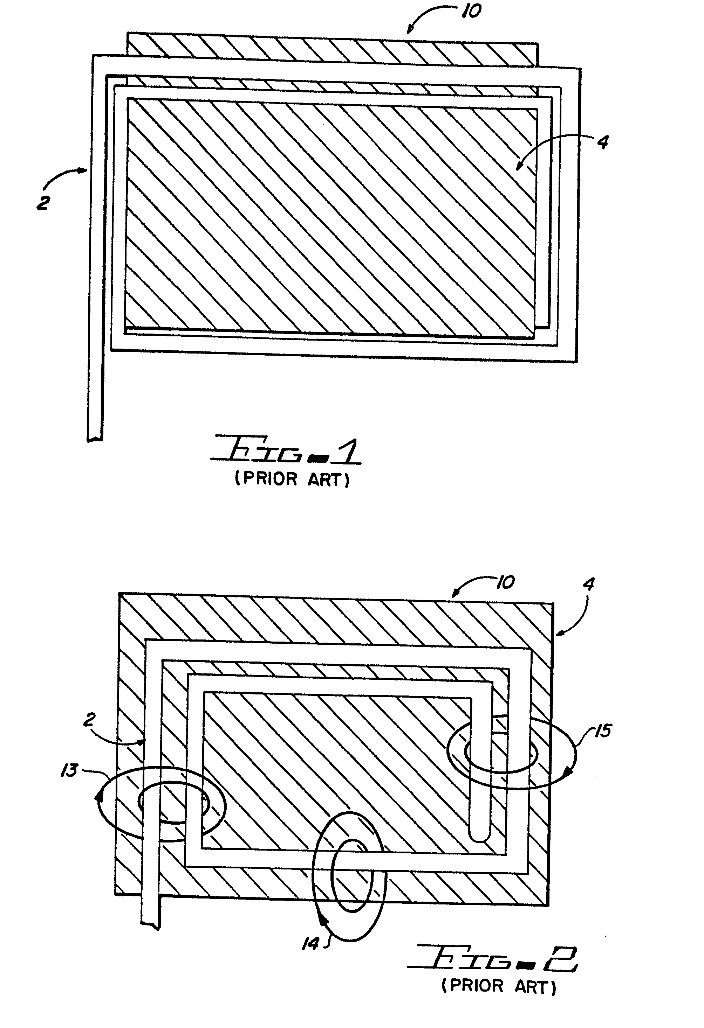

Figure 1 shows schematically a high efficiency coil configuration 2 for an inductive magnetic head in which the conductor turns are deposited, for the most part, outside the closure pad area 4 so that there are no flux leakage paths outside the front gap 10 of the head. However, it is readily apparent that adjacent heads cannot be placed close together because space must be provided for the adjacent coils. Attempts have been made to overcome this problem by overlapping adjacent devices one on top of another, however, this provides an uneven topology and requires a much more complex manufacturing process since the coils must be insulated from one another and cannot all be formed at one time.

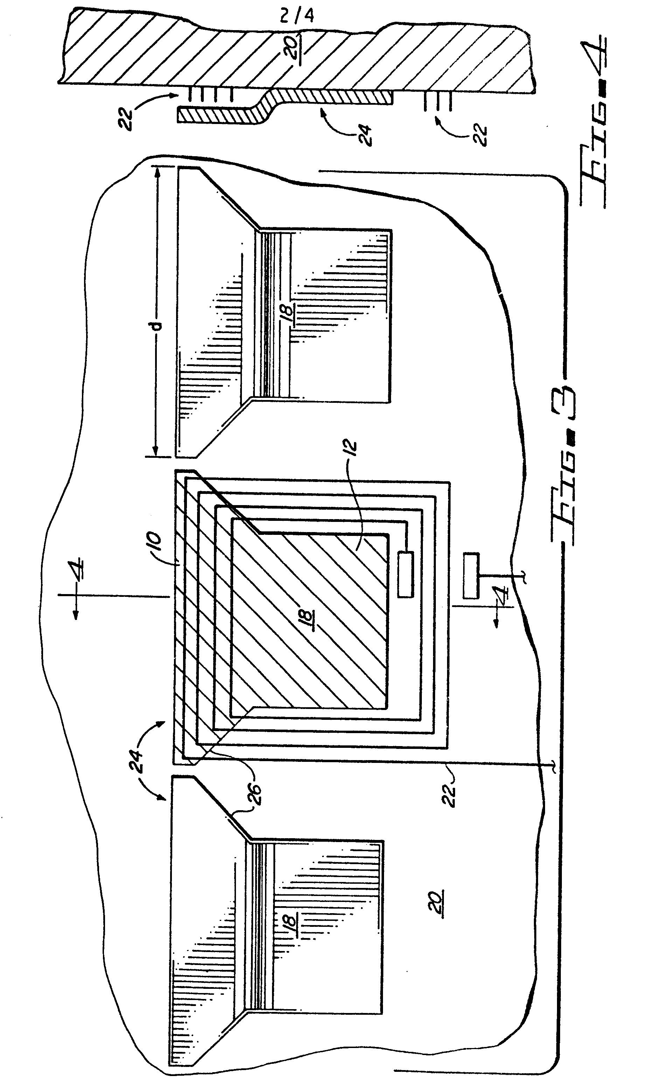

Figure 2 shows another coil configuration which overcomes the space problems of the configuration shown in Figure 1, but does so at the expense of efficiency. With this configuration, there is considerable loss of flux as indicated by flux lines 13, 14 and 15, in areas removed from the front gap 10 and, therefore, a much more powerful signal is required to operate the head successfully.

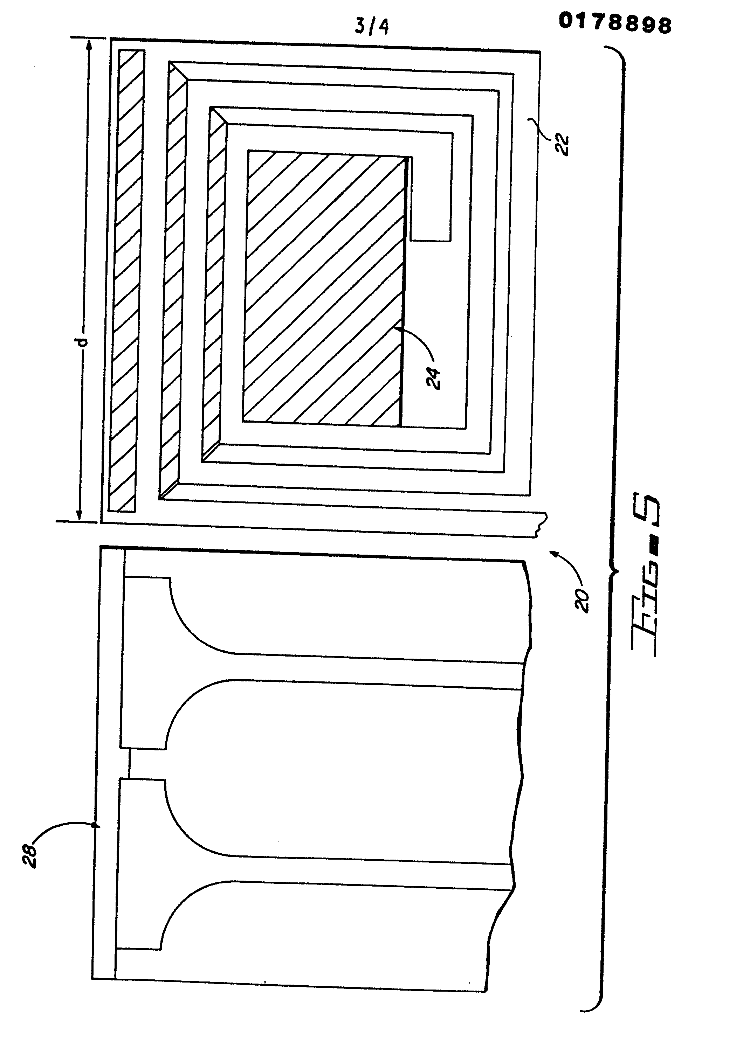

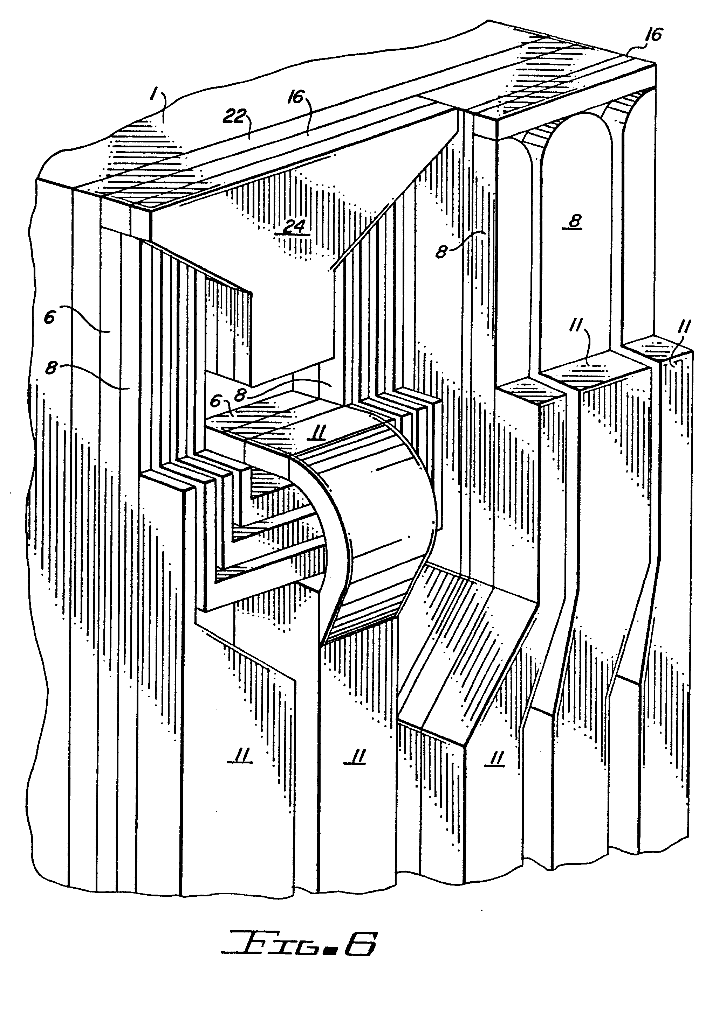

Figures 3 and 4 show a coil configuration which combines the positive features of the configurations shown in Figures 1 and 2 and at the same time lacks their disadvantages. The configuration shown in Figures 3 and 4 is both efficient in operation and requires minimal space. In Figures 3 and 4, a plurality of write track heads 18 are deposited on a substrate 20. The substrate 20 is either a solid ferrite substrate or a substrate coated with a layer of ferrite or other soft magnetic material. Write coil conductors 22, only one of which is shown, are formed on the substrate 20 with maximum coil widths which substantially correspond to the write track widths "d".

A shaped closure pad 24, which is preferably of permalloy but which may be of any soft magnetic material, is deposited over the conductors 22 in the front gap region 10 and extends into contact with a back gap area 12 in the substrate 20. The closure pad 24 is shaped so that the portion in the front gap 10 closely corresponds to the track widths "d" recorded on the media, whereas the back gap region 12 is narrower than the narrowest coil width. To obtain this construction, it has been found that a trapezoidal shaped extension 26 between the front gap 10 and back gap 12 is preferred, although a substantial benefit could be obtained by forming the closure 24 in two rectangular sections, the front gap portion 10 of which has a length corresponding to the track width "d" and the back gap portion 12 of which has a length less than the width of the shortest coil. By ensuring that the coil width is no larger than the desired written track, the space required by the head is minimized so that adjacent heads can be placed very closely together. The shaping of the closure 24 ensures that the write coil 22 and pole piece combination are highly efficient.

The efficiency of a head may be defined by the following equation:

$$\text{EFFICIENCY} = P[bg]/[P[bg] + P[fg] + P[fr]]$$

Where $P[bg]$ is the permeance of the back gap and core of the head, $P[fg]$ is the permeance of the front gap of the head and $P[fr]$ is the permeance of the fringe field areas. From this equation, it can be seen that the highest efficiency possible occurs when both the front gap and fringe areas have near zero permeance or, said another way, nearly infinite reluctance. The front gap permeance is largely determined by the gap lengths, throat height and track width parameters which are designed into the head. These factors cannot effectively be altered and consequently the only areas that can be changed are the back gap and side fringe portions. By shaping the closure piece so that it compensates for a smaller back gap area, which, of course, leads to a decreased back gap permeance, the fringe permeance can be greatly reduced so that the ratio of the back gap permeance to the sum of the back gap permeance, front gap permeance and fringe permeance can be substantially increased. We have found that the efficiency of the head shown in Figure 3 can be up to 20 percent greater than a version where the closure pad is unshaped in such a four-turn coil embodiment.

The shaped closure also permits a lower inductance level for the head with the consequent result that the head has better high frequency performance and enables a more simplified channel circuit design to be used.  This inductance improvement is directly related to the area of the closure piece.

Figure 5 shows part of an interleaved read/write head in which an inductive write head with the shaped closure pad 24 is situated adjacent to a magnetoresistive read element 28.  In Figure 5, like reference characters are used to designate the equivalent elements to those in Figure 3.

Figure 6 shows the interleaved embodiment, of which part is shown in Figure 5, in more detail.  The substrate 1 has deposited thereon an inductive layer 22 on which are formed spiral conductors consisting of layers 6, 8 and 11.  The front gap is provided by layer 16 and the write closure 24 connects the back gap area to the front gap.

## CLAIMS

1. An inductive magnetic transducer comprising a multiturn coil (22) positioned on a magnetic substrate (20) and a soft magnetic closure pad (24) extending from a front gap (10) portion of the transducer across the coil (22) to a back gap area (12) of the transducer, characterised by the closure pad having a width corresponding to a record track width at the front gap of the transducer and a width at the backgap area of the transducer which is less than the minimum width of the coil.

2. A transducer as claimed in claim 1, in which the coil is spiral, the outermost turn of the coil having a width substantially equal to the track width and the innermost turn of the coil having a width slightly greater than the width of the closure pad at the back gap area.

3. A transducer as claimed in claim 1 or claim 2, in which the closure pad comprises rectangular portions in the front gap and back gap areas and an intermediate trapezoidal-shaped portion.

4. A multiple track inductive magnetic head comprising: at least two multiturn coils deposited on a magnetic substrate, the coils being formed closely adjacent to one another; and an individual inductive closure pad associated with and formed across each of the coils, each closure pad having a portion in a front gap area of said head corresponding to a recording track width and a portion in a back gap area of said head having a width less than the minimum width of its associated coil in the back gap area.

5. A head as claimed in claim 4, in which each coil is of spiral form.

6. A head as claimed in claim 4 or claim 5, in which each closure pad comprises rectangular portions in the front gap and back gap areas and an intermediate trapezoidal-shaped portion.

7.   A magnetic head comprising a plurality of inductive write transducers interleaved with a plurality of magnetoresistive read transducers, in which the read and write transducers are formed on a magnetic substrate, and each said write transducer includes a conductive coil formed on said substrate and an inductive closure pad formed over a portion of the coil, the closure pad coupling a front gap portion of the substrate to a back gap portion of the substrate, the closure pad having a front gap width corresponding to a recording track width and a back gap width which is less than the minimum width of the coil at the back gap.

8.   A magnetic head as claimed in claim 7, wherein the coil is of spiral form.

9.   A magnetic head as claimed in claim 7 or claim 8, in which each closure pad comprises rectangular portions in the front and back gap areas and an intermediate trapezoidal-shaped portion.

0178898

_Fig-1_
(PRIOR ART)

_Fig-2_
(PRIOR ART)

2/4

Fig.3

Fig.4

Fig-5

28

20

22

24

d

3/4

0178898

0178898

FIG. 6